# EUROPEAN PATENT APPLICATION

(11) **EP 1 900 580 A1**
(43) Date of publication of application: **19.03.2008**
(21) Application number: 06425640.7
(22) Date of filing: 18.09.2006
(51) Int. Cl.: B60S 3/04, G07F 17/20

(54) **Housing device for brushes in self-service systems for car washing**

(71) Applicant: A.D. Produzione S.R.L., 20019 Settimo Milanese MI (IT)
(72) Inventor: De Luca, Alfredo Rocco, 20020 Barbaiana di Lainate Milano (IT); Mariotto, Enrico Maria, 10151 Torino (IT); Intini, Walter, 20019 Settimo Milanese Milano (IT)
(74) Representative: Faggioni, Marco

(57) **Abstract**

A housing device for brushes (2) in self-service systems for car washing is described, which is released only after selecting and paying a suitable program.

Preferably, the device is provided with a unit, indicating that the arm of the brush (2) is in place.

## Description

This invention refers to a housing device for brushes in self-service systems for car washing.

Self-service systems for car washing are becoming more and more popular. They usually include a control device, enabling the user to select among all washing programs, to be used in connection with the hardware. Most self-service systems include a brush, hanging from an arm, connected with a tube, used to feed water and soap to the brush itself. Usually, an intended program can be performed for using the brush. In order to keep the brush clean, it is kept drawned in a cup containing water.

Usually, paiment is provided for each program to perform. Unfortunately, due to the water into which the brush is drawned, an abuse is possible, namely to use the brush after another program, without the need of paying such a use and without selecting brush program; this is possible by using only the water which is present for keeping it clean.

Such an abuse leads mainly to two drawbacks. First of all, the owner of the system earns less money, because of the lack in the selection of the program. Secondly, the brush can be damaged, and surely is worn out, due to the improper use.

Such drawbacks are brilliantly solved by this invention, referring to a housing device for brushes in self-service systems for car washing comprising a basin of water to keep the brush clean, characterised in that it comprises a lock for clamping the brush.

This invention is now described more in depth with reference to the annexed drawings, wherein:

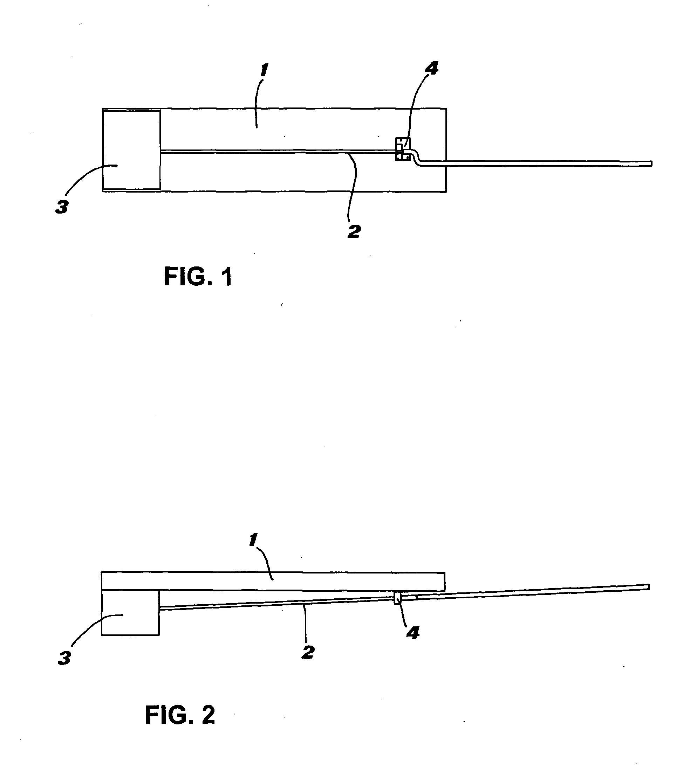

fig. 1 is a plan view of a brush in a locking device according to the invention;
fig. 2 is a side view of the same brush of fig. 1; and
fig. 3A-3G are views of different kinds of locks, suitable for the locking device of this invention.

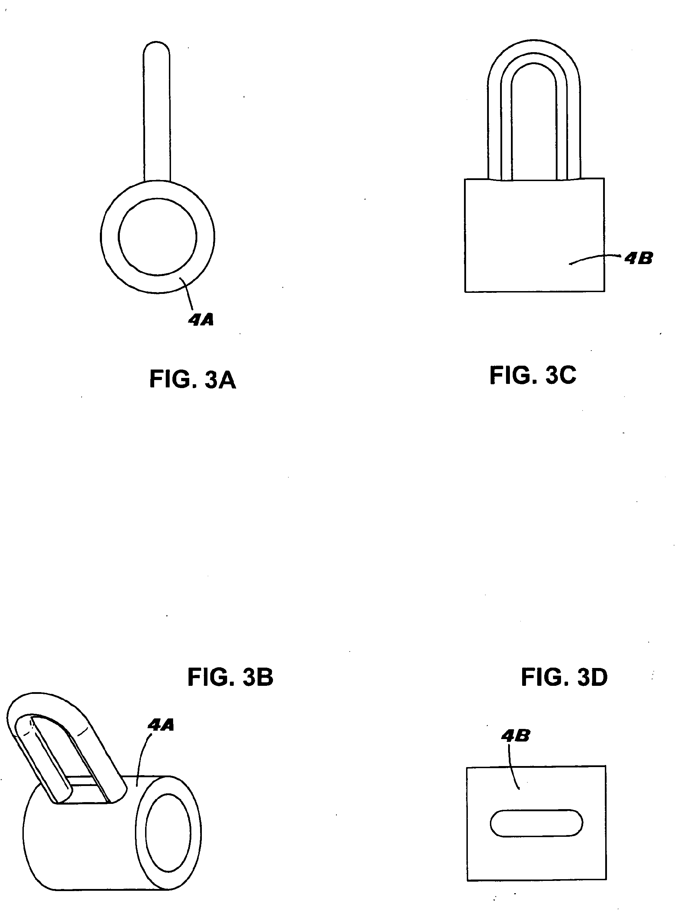

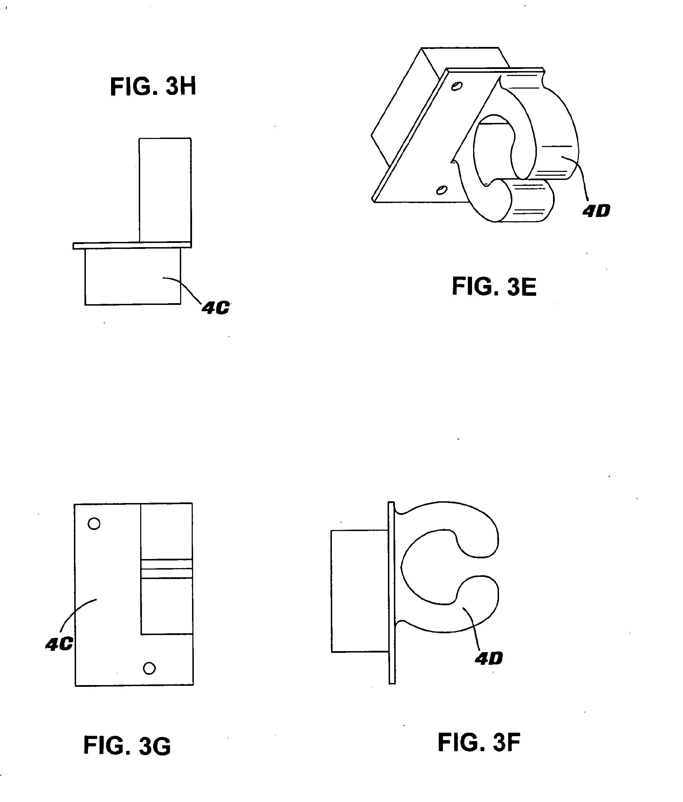

According to the present invention, the housing device is comprised of a support 1 for the brush 2 (only the arm of which is shown in the drawings). The support 1 bears a cup 3, containing water to keep clean the brush 2. According to the invention, the arm of the brush 2 is kept by a lock 4. In figs 3A-3H different kinds of lock are shown, which are suitable for the present invention. Particularly suitable have proven magnetic lock 4C and car lock 4D.

The lock 4 is driven by an intended program. Thus, if the program is not chosen, lock 4 cannot be opened and it is not possible to use the brush 2. As soon as paiment is done and the brush program is selected, the lock 4 is released and the user can grip the arm of the brush 2, take it away from the support 1 and use it for cleaning his or her car. As it can easily be understood, this invention allows a safe and easy locking of the brush, preventing misuse and forcing the user to pay and to select the intended program.

Any kind of lock can be used, mechanical, magnetic, hydraulic, electronic or pneumatical.
In order to increase the safety, it is possible to provide the device with a unit, indicating that the arm of the brush 2 is in its own place. In this way, if the user does not put the brush 2 in the lock 4 after use, the unit does not give a consent signal to the program device and all of the programs are shut off and it is not possible to perform any other program. As soon as the arm is locked again, the unit gives the signal to the program device, which enables the programs, allowing the use of the system for car washing. In this way, another misuse can be prevented, that is that a user, after using the brush 2, leaves it out of place, in order to allow to one or more other user to use the brush without paying. If this is attempted, the second user cannot wash his or her car.

As a unit, any kind of signal unit can be used, like a button, a photocell, the locking of the lock 4 itself and so on.

From the above specification it is apparent that the present invention provides a device which is very useful for owners of systems for car washing, preventing the most common abuses and making the system more profitable.

## Claims

1. Housing device for brushes (2) in self-service systems for car washing, comprising a basin of water to keep the brush clean, **characterised in that** it comprises a lock (4) for clamping the brush (2).

2. Housing device as in claim 1), **characterised in that** such lock (4) is released only after selecting and paying a suitable program.

3. Housing device as claimed in claim 1) or 2), **characterised in that** the lock (4) keeps the arm of the brush (2).

4. Housing as claimed in any previous claim, **characterised in that** said lock is a mechanical, magnetic, hydraulic, electronic or pneumatical lock.

5. Housing device as claimed in claim 4), **characterised in that** such a lock (4) is a magnetic lock (4C) or a car lock (4D).

6. Housing device as claimed in any previous claim, **characterised in that** the device is provided with a unit, indicating that the arm of the brush (2) is in place.

7. Housing device as claimed in claim 6), **characterised in that** as a unit a button, a photocell or the locking of the lock (4) itself is used.
